# EUROPÄISCHE PATENTANMELDUNG

(11) **EP 2 347 857 A2**
(43) Veröffentlichungstag der Anmeldung: **27.07.2011**
(21) Anmeldenummer: 10015652.0
(22) Anmeldetag: 15.12.2010
(51) Int. Cl.: B24B 23/02, B24B 29/00, B24B 55/02, B24D 13/14, B24D 13/18

(54) **Druckluft betriebene Maschine hauptsächlich zum Polieren oder Schleifen eines Werkstückes mit Kühlung desselben, erzeugt durch ungenutzte Antriebsenergie**

(30) Priorität: 26.01.2010 DE 102010006122
(71) Anmelder: Kochanski, Boris, Dipl.-Ing., 46240 Bottrop (DE)
(72) Erfinder: Kochanski, Boris, Dipl.-Ing., 46240 Bottrop (DE)
(74) Vertreter: Lelgemann, Karl-Heinz

(57) **Zusammenfassung**

Eine Maschine (1) zur Bearbeitung eines Werkstückes mit einem Werkzeug (2), das eine Relativbewegung gegenüber dem Werkstück ausübt und das Werkzeug und/oder Werkstück zeitgleich kühlt. Insbesondere soll die Maschine (1) in Form einer Drucklufthandmaschine (1) zum Polieren oder Schleifen lackierter Oberflächen dienlich sein, wobei das durch den Druckluftantrieb (4) der Drucklufthandmaschine (1) rotierbare Polierkissen bzw. Schleifelement (2) mit seiner Unterfläche (3) in Anlage an die zu polierende bzw. schleifende Oberfläche gebracht wird.

Zur Erhöhung des Wirkungsgrads einer derartigen Drucklufthandmaschine (1) wird vorgeschlagen, dass die Abluft des Druckluftantriebes (4) einem Wirbelrohr (16) zugeführt wird und dort in einen kalten (25) bzw. warmen (26) Gasstrom geteilt wird. Der kalte Gasstrom (25) wird mittels einer zweiten Gasleitvorrichtung (7,23,29) zum Polierkissen bzw. Schleifelement (2) geleitet und dort an der Unterfläche (3) des Polierkissens bzw. Schleifelementes (2) mittels ausgebildeter Kanäle (32) vom mittleren Bereich des Polierkissens bzw. Schleifelementes (2) zum Umfangsrand (31) abgeleitet.

## Beschreibung

Die Erfindung bezieht sich auf eine Maschine zur Bearbeitung eines Werkstückes mit einem Werkzeug, das eine Relativbewegung gegenüber dem Werkstück ausübt, wobei die Maschine mit einem unter Druck stehenden Arbeitsgas betrieben wird. Das Abgas des Antriebsmotors wird mit Hilfe einer ersten Gasleitvorrichtung einem Wirbelrohr zugeführt, um dort in einen kalten bzw. warmen Gasstrom aufgeteilt zu werden. Je nach Anwendung der Erfindung wird durch eine zweite Gasleitvorrichtung der jeweils vorteilhafte Gasstrom, im Weiteren Nutzgasstrom genannt, dem Werkzeug zwecks intensiver bzw. sanfter Kühlung zugeführt. Der Betrieb des Wirbelrohrs wird durch die ungenutzte Antriebsenergie, die das Abgas des Antriebsmotors der Maschine in sich trägt, sichergestellt.

Insbesondere soll die Erfindung in Form einer Drucklufthandmaschine zum Polieren oder Schleifen von Oberflächen nutzbar sein, mit einem zentrisch oder mit einem eine Zusatzbewegung überlagertem rotierbaren Polierkissen bzw. Schleifelement, das mit seiner Unterfläche die zu polierende bzw. zu schleifende Oberfläche bearbeitet. Ein Einsatzgebiet soll unter anderem die Nachbearbeitung bzw. Aufbereitung von lackierten Kraftfahrzeugoberflächen sein.

Um Polier- oder Schleifvorgänge zu optimieren und insbesondere, um die dabei entstehende Reibungs- bzw. Abwärme abzuführen, ist es bekannt, Kaltgas einzusetzen. Mit diesem Kaltgas wird die Bearbeitungsfläche vor oder während des Polierens gekühlt.

Eine entsprechende Poliervorrichtung mit Kühlluft als Kaltgas ist in DE 695 04 769 gezeigt. Diese bekannte Poliervorrichtung wird mit Druckluft betrieben. Der Druckluftstrom, der der Poliervorrichtung zugeführt wird, wird vor dem Antriebsmotor aufgeteilt. Ein Teil des Druckluftstroms treibt den Motor der Poliervorrichtung an, während der andere Teil des Druckluftstroms als Kühlluft zwischen die Polierscheibe der Poliervorrichtung und der zu behandelnden Oberfläche geführt wird. Die bekannte Poliervorrichtung hat gegenüber einer gewöhnlichen Druckluft betriebenen Poliervorrichtung einen höheren Druckluft- bzw. Energieverbrauch. Weiterhin ist zu berücksichtigen, dass die genannte Poliervorrichtung nur scheinbar die Bearbeitungsfläche mit sehr kalter entspannter Druckluft kühlt, tatsächlich wird die Druckluft in der Kühlluftaustrittsdüse, die auf die zu polierende Oberfläche gerichtet ist, stark beschleunigt, wobei sie sich abkühlt, sie gewinnt aber fast ihre Ausgangstemperatur (Joule-Thomson-Effekt) durch Verwirbelung und Ausbremsung im Polierkissen zurück. Der Temperaturunterschied zwischen Bearbeitungsfläche und Kühlluft ist zu gering für eine effektive Beseitigung der Reibungs- bzw. Abwärme.

Weiterhin wird eine Poliermaschine in DE 10 2009 013 263 dargestellt, die das kalte Abgas des Druckluftantriebs der Poliermaschine zur Kühlung der Bearbeitungsfläche nutzt. Sie bietet die Möglichkeit, die Bearbeitungsfläche zu kühlen ohne zusätzlichen Energieaufwand. Die Kühlleistung steht aber im direkten Zusammenhang zum Wirkungsgrad des Antriebsmotors der Poliermaschine. Ein Antriebsmotor mit einem hohen Wirkungsgrad erzeugt eine kältere Abluft als ein Antriebsmotor mit einem niedrigen Wirkungsgrad. Problematisch dabei ist, dass die Kosten für den Antriebsmotor mit dem Wirkungsgrad ansteigen.

Ebenfalls sind ein Verfahren zum Polieren oder Schleifen von Lackoberflächen und ein Kaltgasbearbeitungsgerät zur Durchführung des Verfahrens (DE 196 23 931) bekannt, bei denen das Kaltgas, das zum Kühlen der Bearbeitungsfläche genutzt wird, mit Hilfe eines Wirbelrohrs erzeugt wird. Bei dieser Erfindung wird das Wirbelrohr mit einem von der Antriebsdruckluft des Kaltgasbearbeitungsgeräts unabhängigen Druckluftstrom betrieben. Dies hat wiederum einen vergleichsweise hohen Druckluft- bzw. Energieverbrauch zur Folge.

Ausgehend von dem vorstehend geschilderten Stand der Technik liegt der Erfindung die Aufgabe zugrunde, eine Polier- oder Schleifvorrichtung zur Verfügung zu stellen, die einerseits über einen vergleichsweise einfachen technisch-konstruktiven Aufbau verfügt und andererseits beim Polier- bzw. Schleifvorgang erheblich höhere Wirkungsgrade erzielt. Trotz dieser Aufgabe soll diese neuartige Maschine ohne zusätzlichen Energieverbrauch im Verhältnis zu einer herkömmlichen Druckluftpoliermaschine auskommen. Zusätzlich soll es mit dieser Polier- oder Schleifvorrichtung möglich sein, die Bearbeitungsfläche vorzukühlen.

Diese Aufgabe wird erfindungsgemäß auf folgende Art und Weise gelöst:
Vorgeschlagen wird eine mit einem komprimierten Arbeitsgas betriebene Maschine zur Bearbeitung eines Werkstückes mit einem Werkzeug, das eine Relativbewegung gegenüber dem Werkstück ausübt, wobei ein Teil ihres Abgases in Form eines Nutzgasstroms zur Kühlung des Werkstückes und/oder des Werkzeuges genutzt wird. Der Nutzgasstrom wird dadurch erzeugt, dass das vom Antriebsmotor der Erfindung kommende Abgas innerhalb eines Wirbelrohrs aufgeteilt wird. In Bezug auf die Abgasführung ist also das Wirbelrohr zwischen dem Antrieb und dem Werkzeug angeordnet. Je nach Anwendung kann das kalte oder warme Gas, welches das Wirbelrohr liefert, als Nutzgasstrom zum Kühlen genutzt werden. Eine intensive Kühlung wird durch Verwendung der Kaltgasseite des Wirbelrohrs erreicht. Eine sanfte Kühlung wird durch die Nutzung der Warmgasseite erzielt. Mit Hilfe von Gasleitvorrichtungen wird das Abgas des Antriebsmotors zum Wirbelrohr und der Nutzgasstrom weiter zum Werkzeug und/oder Werkstück geleitet.

Sinnvoll erscheint es, die Erfindung in einem Bereich einzusetzen, in dem es infolge der Bearbeitung eines Werkstückes zu einer starken Wärmeentwicklung kommt. Ein solcher Bereich ist die spanende Formung von Werkstücken.

Polier- bzw. Schleifstifte könnten, an einer solchen neuartigen mit Druckluft betriebenen Maschine, auf die erfindungsgemäße Art und Weise zwecks Erhöhung ihrer Standzeiten und Schonung des Werkstückes mit Kühlluft umströmt werden.

Polierwalzen bzw. Fächerschleifer mit Kühlkanälen, an einer mit Druckluft betriebenen Maschine, könnten auf die erfindungsgemäße Art und Weise zwecks Erhöhung ihrer Standzeiten und Schonung des Werkstückes mit Kühlluft durchströmt werden.

Eine Ringbürste mit einem Polyamidbürstenband, an einer mit Druckluft betriebenen Maschine, könnte auf die erfindungsgemäße Art und Weise mit Kühlluft zwecks Erhöhung ihrer Standzeit partiell gekühlt werden.

Vorteilhaft ist es, die Erfindung, wie schon angedeutet, zum Polieren oder Schleifen von Werkstücken bzw. seiner Bearbeitungsflächen zu nutzen.

Zur effektiven Behandlung von Oberflächen, insbesondere von lackierten Fahrzeugoberflächen, wird vorgeschlagen, die erfindungsgemäße Maschine in Form einer Polier- oder Schleifvorrichtung mit einem zentrisch oder mit einem eine Zusatzbewegung überlagertem rotierbaren Polierkissen bzw. Schleifelement, das mit seiner Unterfläche in Anlage an die zu polierende bzw. zu schleifende Bearbeitungsfläche gebracht wird. Sie ist dadurch gekennzeichnet, dass der kühlende Nutzgasstrom mittels einer zweiten Gasleitvorrichtung zum Polierkissen bzw. zum Schleifelement leitbar ist, und dass das Polierkissen bzw. das Schleifelement in sich und/oder im Bereich seiner Unterfläche mit Kanälen ausgebildet ist, durch die hindurch der kühlende Nutzgasstrom von einem mittleren Bereich des Polierkissens bzw. des Schleifelementes zum Umfangsrand des Polierkissens bzw. des Schleifelementes ableitbar ist.

Zweckmäßigerweise ist an der Warmgasseite des Wirbelrohrs ein Ventil angeordnet, um das Verhältnis zwischen dem kalten und warmen Gasstrom zu beeinflussen. Mit Hilfe dieses Ventils kann also der Volumenstrom und die Temperatur des Nutzgasstroms gesteuert werden.

Sinnvoll ist es, die beschriebene Erfindung mit Druckluft zu betreiben. Druckluft ist in meisten Werkstätten des Kraftfahrzeuggewerbes vorhanden und sehr beliebt.

Um den sicheren Betrieb der Erfindung zu gewährleisten, ist es sinnvoll, gefilterte, quasi ölfreie und getrocknete Druckluft der neuartigen Maschine zur Verfügung zu stellen.

Für einen örtlich unabhängigen Betrieb der Erfindung ist es von Vorteil, sie mit einem Kupplungsanschluss zum Zuführen des komprimierten Arbeitsgases auszustatten.

Zweckmäßigerweise sollte der Massenstrom des unter Druck stehenden Arbeitsgases mittels eines Drosselventils steuerbar sein. Die Drehzahl und das Drehmoment des Antriebsmotors kann auf diese Art und Weise beeinflusst werden.

Eine vorteilhafte Ausführungsform der Erfindung ist es, wenn es sich um eine handgeführte Maschine mit Handgriff handelt, durch den hin durch das unter Druck stehende Arbeitsgas dem Antriebsmotor zugeführt wird.

Zweckmäßigerweise ist im bzw. am Handgriff das Drosselventil vorgesehen, dessen Handhabe am Handgriff angeordnet ist.

Es sind Situationen vorstellbar, in denen es sinnvoll ist, das Werkzeug bzw. das Werkstück im Voraus abzukühlen. Bei frischen Fahrzeuglackierungen kann z.B. das Polierergebnis optimiert werden, indem nicht nur während des Polier- und Schleifvorgangs die Lackierung gekühlt wird, sondern auch die zu behandelnde Lackfläche vorab heruntergekühlt wird. Um den Nutzen der Erfindung dementsprechend zu erhöhen, wird vorgeschlagen, sie mit einem Mehrwegeventil und einer dritten Gasleitvorrichtung so auszurüsten, dass das Wirbelrohr direkt mit dem unter Druck stehenden Arbeitsgas betrieben werden kann. In dieser Situation steht der Antriebsmotor still, da ihm kein Arbeitsgas zugeführt wird.

Zweckmäßigerweise ist im bzw. am Handgriff das Mehrwegeventil vorgesehen, dessen Handhabe am Handgriff angeordnet ist.

Lamellenmotoren sind günstige, einfache und robuste Antriebe mit hoher Zuverlässigkeit bei geringem Wartungsaufwand. Sie werden daher sehr häufig als Antrieb für eine mit Druckluft betriebene Maschine genutzt. Gegenüber den genannten Vorteilen steht aber auch der Nachteil, dass diese Motorenart einen niedrigen Wirkungsgrad hat. Ein Grund dafür ist, dass der Lamellenmotor die mögliche vorhandene Expansionsenergie des Arbeitsgases nicht durch eine vollständige Expansion des Gases in ihm selbst nutzen kann. Am Gasaustritt eines Lamellenmotors liegt noch ein Austrittsdruck vor, der in einem Wirbelrohr genutzt werden kann. Da Druckluft ein teurer Energieträger ist, ist es umso wichtiger, die Restenergie des Abgases eines Lamellenmotors zu nutzen. Sinnvollerweise sollte in der erfindungsgemäßen Maschine der so beliebte Lamellenmotor, bevorzugt in einer ölfreien betreibbaren Version, eingesetzt werden.

Vorteilhaft für die Handhabung ist es, die Erfindung in der üblichen Bauart eines "Winkelschleifers" aufzubauen. In dieser Ausführungsform bilden der Handgriff bzw. die Antriebswelle des Antriebsmotors einerseits und die Arbeitsspindel der Maschine andererseits einen rechten Winkel zueinander.

Vorteilhaft ist es, die vom Wirbelrohr kommende zweite Gasleitvorrichtung in Form eines Winkelkopfs an der Maschine auszuführen, in dem eine hohle Arbeitsspindel drehbar gelagert und an deren druckluftantriebsfernem Ende das Polierkissen bzw. Schleifelement mittels eines Haltetellers befestigt ist. Der Nutzgasstrom kann somit mit geringen technisch-konstruktiven Mitteln vom Wirbelrohr kommend in den Winkelkopf, durch seinen Hohlraum und weiter in die hohle Arbeitsspindel zum Polierkissen bzw. Schleifelement geleitet werden.

Bei der oben genannten Bauart kann das Wirbelrohr ohne großen technischen Aufwand nahe oder direkt außen am Winkelkopf der Maschine befestigt werden. Um für das Polierkissen bzw. das Schleifelement einen optimalen Drehzahlbereich zur Verfügung zu stellen, ist es vorteilhaft, wenn zwischen dem Antriebsmotor einerseits und der Arbeitsspindel andererseits ein Drehzahl veränderndes Getriebe angeordnet ist.

Um die Erfindung Platz sparend auszuführen, wäre es sinnvoll, den Winkelkopf und die Arbeitsspindel derart zu gestalten, dass sie selbst als Wirbelrohr fungieren.

Wenn die im Bereich der Unterfläche des Polierkissens bzw. Schleifelementes ausgebildeten Gas führenden Kanäle zur Unterseite hin offen sind, kann das dort strömende kühlende Gas in optimaler Weise seine Wirkung als Kühlmedium entfalten. Üblicherweise werden zum Polieren oder Schleifen von lackierten Oberflächen Schwämme oder nachgiebige Schaumstoffteile eingesetzt. In diese Materialien lassen sich die Kanäle auf einfache Art und Weise einarbeiten.

Wenn das Polierkissen bzw. Schleifelement mit geschlossenen Gas führenden Kanälen durchzogen ist, kann die Unterfläche des Polierkissens bzw. Schleifelementes ungestört und vollflächig ausgestaltet sein, mit den daraus resultierenden Vorteilen für den Polier- oder Schleifvorgang. Wie schon bei dem oben genannten Polierkissen bzw. Schleifelement mit offenen Kanälen gilt auch hier das Gleiche in Bezug auf die Verwendung von Schwämmen und nachgiebigen Schaumstoffteilen.

Die Verwendung offenporiger Schwämme ist besonders sinnvoll, da die offenen Poren selbst den kühlenden Nutzgasstrom ableiten können.

Um den kühlenden Gasstrom vom mittleren Bereich des Polierkissens bzw. des Schleifelements zum Umfangsrand oder umgekehrt abzuleiten, ist es vorteilhaft, wenn die Gas leitenden Kanäle des Polierkissens bzw. des Schleifelements ein Schaufelgitter bilden, das als radiale Strömungsmaschine gestaltet ist.

Wird das durch die Kanäle ausgebildete Schaufelgitter als Verdichter gestaltet, kann der im mittleren Bereich des Polierkissens bzw. des Schleifelements erzeugte Unterdruck für einen verbesserten Abtransport des kühlenden Gasstroms sorgen.

Da Polierkissen bzw. Schleifelemente während ihres Einsatzes einer gewissen Abnutzung unterliegen, müssen sie häufiger ausgetauscht werden. Deshalb ist es von Vorteil, wenn das Polierkissen bzw. Schleifelement mittels einer wieder trennbaren Klettverbindung am Halteteller befestigt werden kann.

Zusätzlich ist es für den Anwender eine Erleichterung, wenn das Polierkissen bzw. Schleifelement mittels einer Führung auf dem Halteteller zentriert wird.

Im Folgenden wird die Erfindung anhand einer Ausführungsform unter Bezugnahme auf die Zeichnung näher erläutert.

Es zeigen:
- Figur 1: eine Schnittdarstellung einer Ausführungsform der erfindungsgemäßen Maschine als Drucklufthandmaschine zum Polieren oder Schleifen und
- Figur 2: eine Unteransicht eines Polierkissens der in Figur 1 gezeigten Ausführungsform als Drucklufthandmaschine zum Polieren oder Schleifen.

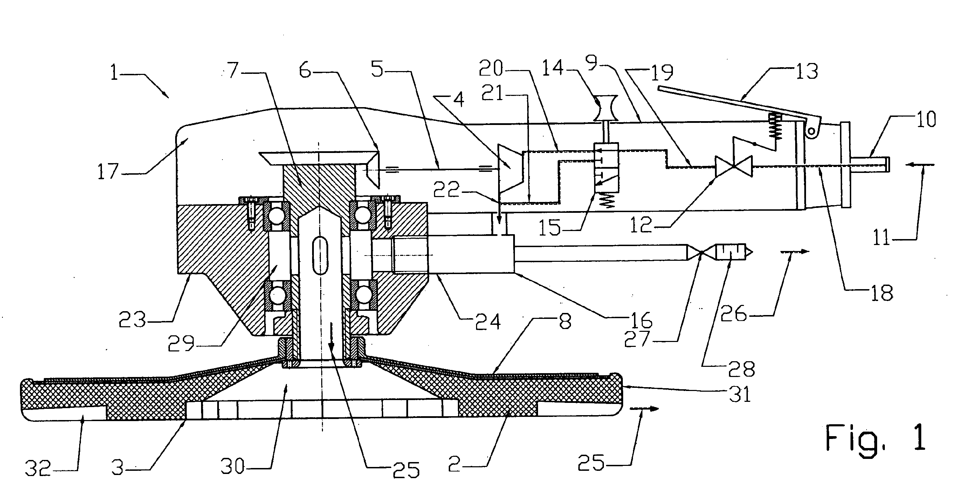

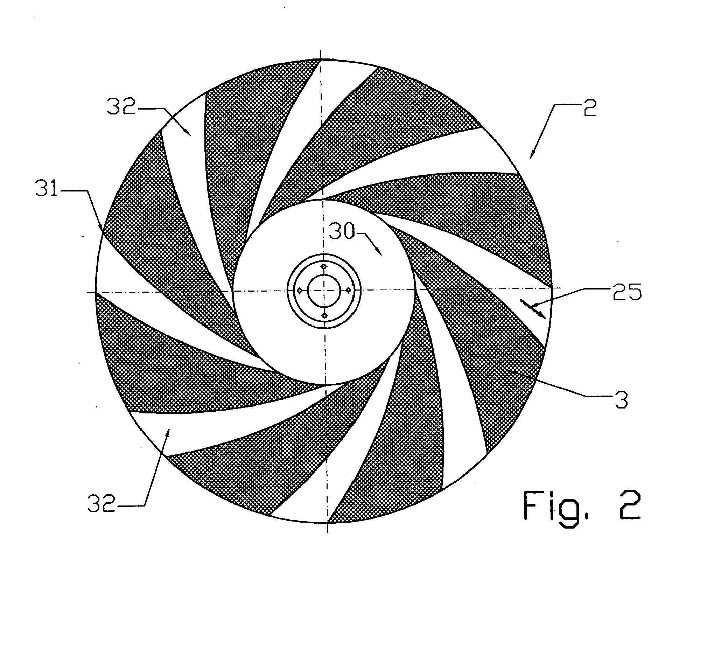

Eine im Folgenden anhand der Figuren 1 und 2 erläuterten Ausführungsform der erfindungsgemäßen Drucklufthandmaschine dient dazu, Oberflächen, z.B. von Kraftfahrzeugteilen, zu polieren.

Hierzu hat die Drucklufthandmaschine 1 ein Polierkissen 2, welches in der dargestellten Ausführungsform kreisförmig ausgebildet ist. Das Polierkissen 2 wird mit seiner Unterfläche 3 in Anlage an die zu polierende Oberfläche gebracht und in eine Rotationsbewegung versetzt, so dass die Unterfläche 3 auf der zu polierenden Oberfläche mit einer vergleichsweise hohen Drehgeschwindigkeit rotiert.

Zur Erzeugung der Rotationsbewegung dient ein symbolisch dargestellter Druckluftantrieb 4, im Speziellen ein Lamellenmotor, dessen Bewegungsenergie mittels einer Antriebswelle 5, einem Drehzahl verändernden Getriebe 6 und einer hohlen Arbeitsspindel 7 zum Polierkissen 2 übertragen wird.

Am antriebsfernen Ende der Arbeitsspindel 7 ist ein Halteteller 8 per Schraubverbindung drehfest angebracht, an dem seinerseits das Polierkissen 2 fixiert ist.

Zur Drucklufthandmaschine 1 gehört des Weiteren ein Handgriff 9, durch den hindurch das vom Kupplungsanschluss 10 kommende Arbeitsgas, in Form von Antriebsdruckluft 11, zum Druckluftantrieb 4 geführt wird. Zur Steuerung des Massenstroms der Antriebsdruckluft 11 ist im Handgriff 9 ein sinnbildlich gezeigtes Drosselventil 12 vorgesehen, welches mittels einer am Handgriff 9 angeordneten Handhabe 13 verstellbar ist. Ebenfalls ist am Handgriff 9 eine Handhabe 14 für ein symbolisch abgebildetes Mehrwegeventil 15 angeordnet, das dazu dient, die vom Drosselventil 12 kommende Antriebsdruckluft 11 einerseits in Richtung des Druckluftantriebes 4 oder andererseits direkt in Richtung des Wirbelrohrs 16 weiterzuleiten.

Die Antriebsdruckluft 11 wird durch einen am Gehäuse 17 angeordneten Kupplungsanschluss 10 und einem Druckluftkanal 18 zum Drosselventil 12 geführt. Von dort aus wird die Antriebsdruckluft 11 mittels eines weiteren Druckluftkanals 19 zum Mehrwegeventil 15 geführt. Vom Mehrwegeventil 15 aus führt einerseits ein dritter Druckluftkanal 20 zum Druckluftantrieb 4 und andererseits die dritte Gasleitvorrichtung 21 direkt zum Wirbelrohr 16.

Nachdem die Antriebsdruckluft 11 einen Teil ihrer Antriebsenergie zum Betrieb des Polierkissens 2 abgegeben hat, wird sie als Abgas vom Gasaustritt des Druckluftantriebes 4 mit Hilfe der ersten Gasleitvorrichtung 22 zum Wirbelrohr 16 geleitet. In der dargestellten Ausführungsform werden die Gasleitvorrichtungen 21, 22, die vom Mehrwegeventil 15 und vom Druckluftantrieb 4 kommen, kurz vor dem Wirbelrohr 16 zusammengeführt. Die beschriebenen Druckluftkanäle 18, 19, 20 und Gasleitvorrichtungen 21, 22 sind ebenfalls wie auch andere Bauteile mit Hilfe von Symbolen vereinfacht dargestellt.

Das Wirbelrohr 16 ist außerhalb des Gehäuses 17 angeordnet. Es wird durch eine geeignete Verbindung in der Nähe des Handgriffs und einer weiteren Verbindung mit dem Winkelkopf 23 der Drucklufthandmaschine 1 gehalten. Es dient dazu, das vom Druckluftantrieb 4 kommende Abgas oder die vom Mehrwegeventil 15 kommende Antriebsdruckluft 11 in einen kalten bzw. warmen Gasstrom zu teilen. Wie in der in Figur 1 dargestellten Ausführungsform ist die Kaltgasseite 24 des Wirbelrohrs mit dem Winkelkopf 23 verbunden. Das bedeutet, dass der kalte Gasstrom des Wirbelrohrs 16 als Nutzgasstrom 25 zum Kühlen des Polierkissens 2 Verwendung findet. Der warme Gasstrom 26 wird über ein Ventil 27 und einen nicht unbedingt erforderlichen Schalldämpfer 28 in die Umgebung entlassen. Da der Austrittsdruck des Abgases eines Lamellenmotors als Druckluftantrieb 4 noch sehr hoch ist, wird der Betrieb des Wirbelrohrs 16 sichergestellt.

Der Winkelkopf 23, an dem das Wirbelrohr 16 befestigt ist und die hohle Arbeitsspindel 7, die im Winkelkopf 23 bzw. seinem Hohlraum 29 drehbar gelagert ist, bilden die zweite Gasleitvorrichtung, die den kalten Nutzgasstrom 25 von der Kaltgasseite 24 des Wirbelrohrs 16 zum Polierkissen 2 leitet.

Wie am besten aus Figur 2 ersichtlich, ist das Polierkissen 2 im inneren Bereich mit einem Hohlraum 30 versehen, von dem aus sich zum Umfangsrand 31 des Polierkissens 2 Gas leitende Kanäle 32 erstrecken. Die Gas leitenden Kanäle 32 bilden an der Unterfläche 3 bzw. nahe an der Unterfläche 3 angeordnetem Bereich ein Schaufelgitter, mit der Folge, dass das Polierkissen 2 wie eine radiale Strömungsmaschine arbeitet. Dadurch wird die ungehinderte Abströmung des Nutzgasstroms 25 im Bereich des Polierkissens gewährleistet. Dieser Effekt wird durch eine Ausbildung des Schaufelgitters als Verdichter verstärkt. Das Schaufelgitter kann leicht in ein aus offenporigem Schaumstoff bestehendes Polierkissen 2 eingearbeitet werden.

Der kalte Nutzgasstrom 25, der durch die Teilung des Abgasstroms des Druckluftantriebs 4 im Wirbelrohr 16 entsteht, dient im Bereich des Polierkissens 2 der Drucklufthandmaschine 1 als Kühlmedium, mittels dem die bei der Relativbewegung zwischen dem Polierkissen 2 einerseits und der zu polierenden Oberfläche andererseits entstehende Wärme gezielt und gesteuert aus dem Bereich des Polierkissens 2 abtransportiert werden kann. Der gezielte Abtransport der entstehenden Wärme hat zur Folge, dass sich frisch aufgetragener Fahrzeuglack mit weniger Aufwand als herkömmlich polieren lässt und dass die Haltbarkeit des aus Schaumstoff bestehenden Polierkissens 2 erhöht wird.

## Patentansprüche

1. Bearbeitungsmaschine (1) zur Bearbeitung eines Werkstücks, mit einem Antriebsmotor (4), der mittels eines unter Druck stehenden Arbeitsgases (11) antreibbar ist, einem Werkzeug (2), das in Bezug auf das zu bearbeitende Werkstück eine Relativbewegung ausführt, **gekennzeichnet durch** eine erste Gasleitvorrichtung (22), in die das Abgas des Antriebsmotors (4) einleitbar ist, ein Wirbelrohr (16), dem das Abgas des Antriebsmotors (4) mittels der ersten Gasleitvorrichtung (22) zuführbar und mittels dem das Abgas in einen warmen Gasstrom (26) und einen kalten Gasstrom (25) aufteilbar ist, und eine zweite Gasleitvorrichtung (7, 23, 29), mittels der der kalte bzw. der warme Gasstrom (25) bzw. (26) vom Wirbelrohr (16) dem Werkzeug (2) und/oder dem zu bearbeitenden Werkstück zuführbar ist.

2. Bearbeitungsmaschine nach Anspruch 1, bei der der kühlende Gasstrom (25) bzw. (26) derart geleitet wird, dass er das Werkzeug (2) zwecks Kühlung umströmt.

3. Bearbeitungsmaschine nach Anspruch 1, bei der der kühlende Gasstrom (25) bzw. (26) derart geleitet wird, dass er das Werkzeug (2) zwecks Kühlung durchströmt.

4. Bearbeitungsmaschine nach Anspruch 1, bei der der kühlende Gasstrom (25) bzw. (26) derart geleitet wird, dass er das Werkzeug (2) partiell kühlt.

5. Bearbeitungsmaschine nach einem der Ansprüche 1 bis 4, die als Polier- oder Schleifmaschine zum Polieren bzw. Schleifen von Werkstücken bzw. Bearbeitungsflächen von Werkstücken ausgebildet ist.

6. Bearbeitungsmaschine nach einem der Ansprüche 1 bis 5, mit einem zentrisch rotierbaren oder einem durch eine Zusatzbewegung überlagert rotierbaren Polierkissen (2) bzw. Schleifelement als Werkzeug, das mit seiner Unterfläche (3) in Anlage an eine zu polierende bzw. zu schleifende Bearbeitungsfläche bringbar ist, wobei der vom Wirbelrohr (16) kommende Gasstrom (25) bzw. (26) mittels der zweiten Gasleitvorrichtung (7, 23, 29) zum Polierkissen (2) bzw. zum Schleifelement leitbar ist und das Polierkissen (2) bzw. das Schleifelement in sich und/oder im Bereich seiner Unterfläche (3) mit Kanälen (32) ausgebildet ist, durch die hindurch der Gasstrom (25) bzw. (26) von einem mittleren Bereich des Polierkissens (2) bzw. des Schleifelements zum Umfangsrand (31) des Polierkissens (2) bzw. des Schleifelements ableitbar ist.

7. Bearbeitungsmaschine nach einem der Ansprüche 1 bis 6, mit einer dritten Gasleitvorrichtung (21) zur direkten Beaufschlagung des Wirbelrohrs (16) mit dem unter Druck stehenden Arbeitsgas (11).

8. Bearbeitungsmaschine nach einem der Ansprüche 1 bis 7, bei der ein Winkelkopf (23) und eine Arbeitsspindel (7) der Bearbeitungsmaschine so ausgebildet sind, dass sie das Wirbelrohr (16) ausgestalten.

9. Polierkissen (2) bzw. Schleifelement für eine Bearbeitungsmaschine (1) nach einem der Ansprüche 1 bis 8, mit Kanälen (32), die einen zu kühlenden Gasstrom (25) bzw. (26) vom inneren Bereich des Polierkissens (2) bzw. des Schleifelements nach außen zum Umfangsrand (31) desselben oder vom Umfangsrand (31) des Polierkissens (2) bzw. des Schleifelements zum inneren Bereich desselben ableiten, wobei die Kanäle (32) des Polierkissens (2) bzw. des Schleifelements geschlossen oder im Bereich der Unterfläche (3) des Polierkissens (2) bzw. des Schleifelements zur Unterseite desselben hin offen sind und wobei das Polierkissen (2) bzw. Schleifelement als Schwamm oder nachgiebiges Schaumstoffteil ausgebildet ist.

10. Polierkissen (2) bzw. Schleifelement nach Anspruch 9, das aus offenporigem und luftdurchlässigem Material besteht.

11. Polierkissen (2) bzw. Schleifelement nach Anspruch 9 oder 10, mit Gas ableitenden Kanälen (32), die ein Schaufelgitter bilden, das als radiale Strömungsmaschine gestaltet ist.

12. Polierkissen (2) bzw. Schleifelement nach Anspruch 11, das als Verdichter gestaltet ist.

13. Polierkissen (2) bzw. Schleifelement nach einem der Ansprüche 9 bis 12, das mittels einer wieder trennbaren Klettverbindung an einem Halteteller (8) der Bearbeitungsmaschine (1) befestigbar ist.

14. Polierkissen (2) bzw. Schleifelement nach einem der Ansprüche 9 bis 13, das mittels einer Führung auf dem Halteteller (8) zentrierbar ist.
